(19) Europäisches Patentamt
European Patent Office
Office européen des brevets

(11) **EP 4 169 698 A1**

(12) **EUROPEAN PATENT APPLICATION**
published in accordance with Art. 153(4) EPC

(43) Date of publication:
26.04.2023 Bulletin 2023/17

(21) Application number: 21828745.6

(22) Date of filing: 21.06.2021

(51) International Patent Classification (IPC):
*B29C 64/364* (2017.01)      *B29C 64/129* (2017.01)
*B33Y 30/00* (2015.01)

(52) Cooperative Patent Classification (CPC):
B29C 64/124; B29C 64/129; B29C 64/20;
B29C 64/264; B29C 64/364; B33Y 30/00

(86) International application number:
PCT/CN2021/101143

(87) International publication number:
WO 2021/259178 (30.12.2021 Gazette 2021/52)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 22.06.2020 CN 202010574588

(71) Applicant: Prismlab China Ltd.
Shanghai 201612 (CN)

(72) Inventor: HOU, Feng
Shanghai 201612 (CN)

(74) Representative: Taylor, Gail
Kilburn & Strode LLP
Lacon London
84 Theobalds Road
London WC1X 8NL (GB)

(54) **LIGHT-CURING 3D PRINTING DEVICE AND PRINTING METHOD**

(57) Provided are a light-curing 3D printing device and a printing method. The device comprises: a housing, the housing being suitable for containing a liquid photosensitive resin, and one end surface of the housing comprising a light-transmitting panel; a carrying platform, which is disposed in the housing and is used to carry a molding workpiece; a drive mechanism, which is used to drive the carrying platform to move closer to and away from the light-transmitting panel; an optical system, which comprises an exposure device that is located outside the housing and is opposite to the light-transmitting panel, the exposure device being suitable for emitting a light beam pattern from a light emitting side, so that a layer of the liquid photosensitive resin, which is in the housing and is closely attached to the light-transmitting panel, can be controllably cured; and a pressure adjusting element, which is disposed on the housing and is used to adjust the pressure at the interior of the housing, the pressure adjusting element being used, at least when the carrying platform is far from the light-transmitting panel, to reduce the environmental air pressure received at the interior of the housing so as to separate the molding workpiece from the light-transmitting panel. The present invention is suitable for printing fine 3D models having high requirements for precision.

FIG.2

**Description**

Technical Field

The present invention relates to a 3D printing device, in particular relates to a light-curing 3D printing device.

Background

3D printing technology is based on the computer three-dimensional design model, the model is layered by software, and metal powder, ceramic powder, plastic, cell tissue and other special materials are stacked and bonded layer by layer by means of laser beams and hot-melt nozzles and finally superimposed to form a physical product. Unlike the traditional manufacturing industry that uses molds, turning and milling and other mechanical processing methods to shape and cut raw materials to produce final products, 3D printing transforms a three-dimensional entity into several two-dimensional planes, and produces by processing materials and superimposing them layer by layer, which greatly reduces the manufacturing complexity. This digital manufacturing mode does not require complex processes, huge machine tools, or a lot of manpower, components of any shape can be generated directly from computer graphics data, enabling manufacturing to extend to a wider range of production groups.

At present, the molding method of 3D printing technology is still evolving. Among various molding methods, the light-curing method is a relatively mature method. The light-curing method uses the principle that photosensitive materials (usually photosensitive resins) are cured after being emitted by ultraviolet lasers and the materials are accumulated and molded, it has the characteristics of high molding precision, good surface smoothness, and high material utilization rate.

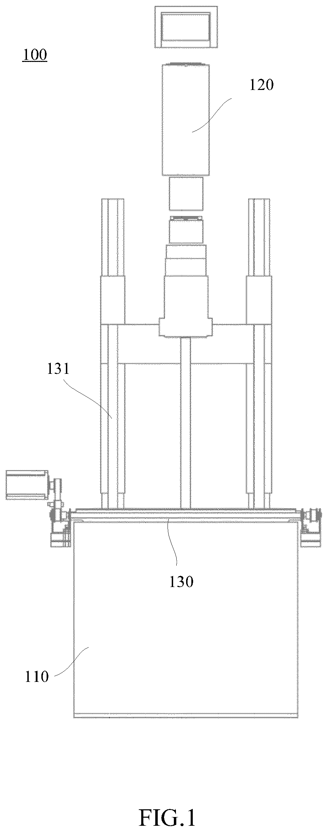

According to the relative position of the light beam and the liquid tank, light-curing 3D printing device can generally be classified as upper-mounted, lower-mounted or side-mounted. FIG. 1 is a structural schematic view of an upper -mounted light-curing 3D printing device, wherein the optical system 120 is located above the liquid tank 110, and the light beam emits the liquid photosensitive resin in the liquid tank 110 from above. Referring to FIG. 1, the 3D printing device 100 includes a liquid tank 110 containing liquid photosensitive resin, an optical system 120 for curing the photosensitive resin, and a lifting platform 130 for connecting molding workpieces. The optical system 120 is located above the liquid tank 110, and emitting the light beam pattern so that the uppermost layer of photosensitive resin in the liquid tank 110 is cured according to the light beam pattern, this layer of cured photosensitive resin is a layer in the three-dimensional workpiece to be printed, called a layer of the molding workpiece. Every time after the optical system 120 emits the light beam pattern to cause a layer of photosensitive resin cured, the lifting platform 130 will drop slightly to drive the layer of the molding workpiece down to a predetermined distance, at this time, the coating device (not shown in any drawings) in the 3D printing device 100 will coat the liquid photosensitive resin to the surface of the molding workpiece for the next exposure. In such a cycle, the three-dimensional model is printed layer by layer from the bottom layer to the top layer, and the three-dimensional molding workpiece is accumulated.

However, the use of a coating device will cause the problem of uneven coating, which will affect the printing precision, especially for micro-scale and nano-scale 3D printing, uneven coating will have a huge impact on printing precision, which is almost impossible to be fulfilled.

Summary

The technical problem to be solved by the present invention is to provide a light-curing 3D printing device with a pressure adjustment function.

In order to solve the above technical problems, this invention provides a light-curing 3D printing device. The device comprises: a housing, the housing being suitable for containing a liquid photosensitive resin, and one end surface of the housing comprising a light-transmitting panel; a carrying platform, which is disposed in the housing and is used to carry a molding workpiece; a drive mechanism, which is used to drive the carrying platform to move closer to and away from the light-transmitting panel; an optical system, which comprises an exposure device that is located outside the housing and is opposite to the light-transmitting panel, the exposure device being suitable for emitting a light beam pattern from a light emitting side, so that a layer of the liquid photosensitive resin, which is in the housing and is closely attached to the light-transmitting panel, can be controllably cured; and a pressure adjusting element, which is disposed on the housing and is used to adjust the pressure at the interior of the housing, the pressure adjusting element being used, at least when the carrying platform is far from the light-transmitting panel, to reduce the environmental air pressure received at the interior of the housing so as to separate the molding workpiece from the light-transmitting panel. The present invention is suitable for printing fine 3D models having high requirements for precision.

In an embodiment of the present invention, the pressure adjusting element is used to at least partially recover the environmental air pressure received at the interior of the housing after the molding workpiece is separated from the light-transmitting panel.

In an embodiment of the present invention, during a printing process of the molding workpiece, the housing remains closed and is filled with the liquid photosensitive resin.

In an embodiment of the present invention, during the printing process of the molding workpiece, the housing remains closed and is filled with the liquid photosensitive resin.

In an embodiment of the present invention, a side of the light-transmitting panel contacting the liquid photosensitive resin has a contact layer, and the contact layer is a non-stick material.

In an embodiment of the present invention, the pressure adjusting element comprises: a piston, the piston is in contact with the liquid photosensitive resin in the housing; and a driver, the driver is connected with the piston, and the driver is used to drive the piston for reciprocating motion.

In an embodiment of the present invention, the pressure adjusting element comprises: a second pipeline connected to the housing, the second pipeline includes gas, and the gas is in contact with the liquid photosensitive resin in the housing; and a second pump connected to the second pipeline, the second pump is used for inputting the gas into the second pipeline and extracting the gas from the second pipeline.

In an embodiment of the present invention, further comprising: a storage tank connected to the housing, the storage tank is used to store the liquid photosensitive resin; a first pump connected to the storage tank, the first pump is used to inject the liquid photosensitive resin in the storage tank into the housing before a printing, so that the housing is filled with the liquid photosensitive resin, and refilling the liquid photosensitive resin in the housing into the storage tank after the printing is finished; and a vent valve interconnecting with the housing, the vent valve is opened when the liquid photosensitive resin is injected into the housing and the liquid photosensitive resin is refilled into the storage tank, and closed during the printing process of the molded workpiece.

In an embodiment of the present invention, further comprising a pressure gauge for measuring the pressure inside the housing.

In an embodiment of the present invention, a space between the light emitting side of the exposure device and the light-transmitting panel is filled with immersion liquid, so that a light beam emitted from the light emitting side passes through the immersion liquid and reaches the liquid photosensitive resin in the housing.

In order to solve the above technical problems, the present invention also proposes a light-curing 3D printing method, comprising: moving a carrying platform in a housing containing a liquid photosensitive resin to a printing position; emitting a light beam pattern from an optical system to a light-transmitting panel on the housing, and the light beam pattern passing through the light-transmitting panel to controllably cured the liquid photosensitive resin to form a layer of molding workpiece on the carrying platform; reducing an environmental air pressure received at the interior of the housing; moving the carrying platform away from the light-transmitting panel to separate the molding workpiece from the light-transmitting panel; at least partially recovering the environmental air pressure received at the interior of the housing; and moving the carrying platform to next printing position.

In an embodiment of the present invention, further comprising: before a printing starts, opening a vent valve connected to a storage tank on the housing, and injecting the liquid photosensitive resin into the housing from the storage tank; closing the vent valve before the printing begins; and after the printing is finished, opening the vent valve to refill the liquid photosensitive resin in the housing into the storage tank.

Compared with the prior art, the present invention has the following advantages: the pressure adjusting element of the present invention can adjust the pressure inside the housing, and by reducing the environmental air pressure inside the housing to reduce the resistance encountered when the carrying platform drives the molding workpiece away from the light-transmitting panel, protecting the success rate and integrity of the molding workpiece, and prevent the deformation of the housing and the light-transmitting panel by at least partially recovering the environmental air pressure inside the housing, which is conducive to fine 3D model printing with high precision requirements, and is conducive to increasing the speed and fullness of liquid photosensitive resin flowing into the printing area, improving the efficiency and quality of 3D printing.

Brief Description of the Drawings

In order to make the above-mentioned purposes, characteristics and advantages of the present invention more obvious and understandable, the specific embodiments of the present invention will be described in detail below in combination with the drawings, wherein:

FIG. 1 is a structural schematic view of an upper-mounted light-curing 3D printing device;

FIG. 2 is a structural schematic view of a light-curing 3D printing device according to an embodiment of the present invention;

FIG. 3 is a structural schematic view of a light-curing 3D printing device according to another embodiment of the present invention;

FIG. 4A is a structural schematic view of a light-curing 3D printing device according to another embodiment of the present invention;

FIG. 4B is a structural schematic view of a light-curing 3D printing device according to another embodiment of the present invention;

FIG. 5 is a structural schematic view of a light-curing 3D printing device according to another embodiment of the present invention;

FIG. 6 is an exemplary flowchart of a light-curing 3D printing method according to an embodiment of the present invention;

FIG. 7A-7D are schematic diagrams of processes of a light-curing 3D printing method according to an embodiment of the present invention.

Preferred Embodiment of the Present Invention

In order to make the above-mentioned purposes, characteristics and advantages of the present invention more obvious and understandable, the specific embodiments of the present invention will be described in detail below in conjunction with the drawings.

In the following description, many specific details are set forth in order to fully understand the present invention, but the present invention can also be implemented in other ways than those described here, so the present invention is not limited by the specific embodiments disclosed below.

As indicated in this application and claims, the terms "a", "an", "a kind of" and/or "the" do not specifically refer to the singular and may include the plural unless the context clearly indicates an exception. Generally speaking, the terms "comprising" and "including" only suggest the inclusion of clearly identified steps and elements, and these steps and elements do not constitute an exclusive list, and the method or device may also contain other steps or elements.

Flowcharts are used in the present invention to illustrate the operations performed according to the embodiments of the present invention. It should be understood that the preceding or following operations are not necessarily performed in the exact order. On the contrary, various steps may be processed in reverse order or simultaneously. At the same time, other operations are either added to these processes, or a certain step or several steps are removed from these processes.

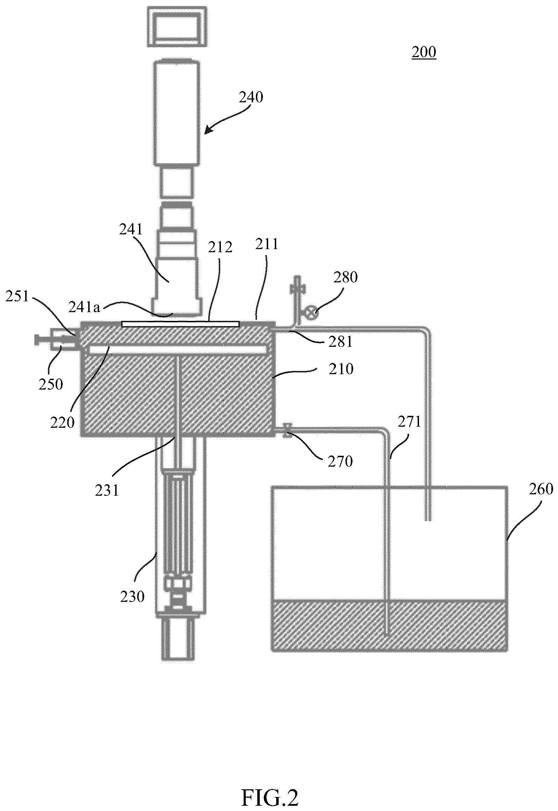

FIG. 2 is a structural schematic view of a light-curing 3D printing device according to an embodiment of the present invention. Referring to FIG. 2, the light-curing 3D printing device 200 includes a housing 210, a carrying platform 220, a drive mechanism 230, an optical system 240 and a pressure adjustment element 250. It should be noted that FIG. 2 illustrates an embodiment of the present invention with an upper-mounted 3D printing device as an example, and it is not intended to limit the printing method of the light-curing 3D printing device of the present invention, the light-curing 3D printing device of the present invention may be of an upper-mounted type, a lower-mounted type, or a side-mounted type.

The housing 210 is used to contain liquid photosensitive resin. As shown in FIG. 2, the housing 210 has been filled with liquid photosensitive resin for molding workpieces. FIG. 2 is a front sectional view of the housing 210, wherein the housing 210 is in the shape of a cuboid and is a box that can be closed. FIG. 2 is not intended to limit the specific shape of the housing 210. In other embodiments, the shape of the housing 210 may be any suitable shape, such as a cylinder.

Referring to FIG. 2, an end surface 211 of the housing 210 has a light-transmitting panel 212. The light beam emitted from the optical system 240 can pass through the light-transmitting panel 212 to reach the liquid photosensitive resin under the end surface 211, and the liquid photosensitive resin emitted by the light beam is cured to form a molding workpiece. The printing thickness (layer thickness) of the liquid photosensitive resin is determined by the irradiation parameters of the optical system 240 and the distance between the upper surface of the molding workpiece on the carrying platform 220 and the lower surface of the light-transmitting panel 212. For the cuboid housing 210, the end surface 211 is the surface of the cuboid facing the direction of the optical system 240. The present invention does not limit the size and shape of the light-transmitting panel 212, and the light-transmitting panel 212 can be any shape with an area smaller than or equal to the end surface 211. Preferably, the light-transmitting panel 212 is glass. The surface of the housing 210 is made of opaque material except the light-transmitting panel 212 to improve strength.

Since the 3D printing device of the present invention adopts the light-transmitting panel 212, there is no need to use a coating device, which can avoid precision problems caused by uneven coating and improve printing precision.

In some embodiments, the side of the light-transmitting panel 212 in contact with the liquid photosensitive resin is the lower surface of the light-transmitting panel 212, and a contact layer is disposed on the lower surface, and the contact layer is a non-stick material. The contact layer can prevent the cured resin from adhering to the lower surface of the light-transmitting panel 212, and facilitate the separation of the cured resin from the lower surface inside the housing under the action of external force. In other embodiments, such as high-precision micro-nano printing, due to high precision requirements, a non-stick layer is often directly coated on the glass, that is, the light-transmitting panel 212.

Referring to FIG. 2, the carrying platform 220 is disposed inside the housing 210 and is used for carrying the molding workpiece. In the state shown in FIG. 2, printing has not started yet, and the upper surface of the carrying platform 220 has not yet carrying any molding workpiece.

Referring to FIG. 2, a drive mechanism 230 is provided under the housing 210, and the drive mechanism 230 is connected to the carrying platform 220 for driving the carrying platform 220 to move closer to and away from the light-transmitting panel 212. For the embodiment shown in FIG. 2, the drive mechanism 230 drives the carrying platform 220 to move up and down in the vertical direction. For a lower-mounted 3D printing device, the drive mechanism 230 also drives the carrying platform 220 to move up and down in the vertical direction. For a side-mounted 3D printing device, the drive mechanism 230 drives the carrying platform 220 to move left and right in the horizontal direction.

In the embodiment shown in FIG. 2, the drive mechanism 230 is mainly disposed outside the housing 210, and is connected to the carrying platform 220 by a connecting rod 231 passing through the housing 210, so as to drive the carrying platform 220 to move. The connecting rod 231 may be a lead screw. The setting of the connecting rod 231 needs to ensure that the liquid photosensitive resin in the housing 210 does not leak out, for example, a sealing gasket is provided at the intersection of the connecting rod 231 and the housing 210.

Referring to FIG. 2, the optical system 240 includes an exposure device 241 located outside the housing 210 and corresponding to the light-transmitting panel 212. The exposure device 241 is suitable for emitting a light beam pattern from the light emitting side 241a, so that a layer of liquid photosensitive resin close to the light-transmitting panel 212 in the housing 210 is controllably cured. In the embodiment shown in FIG. 2, the exposure device 241 is located above the housing 210, and its light emitting side 241a is located on a side of the exposure device 241 close to the light-transmitting panel 212. There is a certain distance and gap between the light emitting side 241a and the light-transmitting panel 212. FIG. 2 is not used to limit the distance between the light emitting side 241a and the light-transmitting panel 212, and the distance can be set as required. The optical system 240 shown in FIG. 2 is only for illustration, and is not intended to limit the specific structure of the optical system 240 of the present invention.

It can be understood that, for the upper-mounted printing method shown in FIG. 2, the optical system 240 may not be located directly above the housing 210, as long as the light beam emitted from the optical system 240 emits the light-transmitting panel 212 of the housing 210 from top to bottom. For example, the optical system 240 emits parallel light, and a mirror is arranged above the housing 210, and the light beam is emitted to the light-transmitting panel 212 through mirror reflection. Surely, the light beam can be vertically emitted to the light-transmitting panel 212, or can be inclined at a certain angle.

Referring to FIG. 2, the pressure adjusting element 250 is disposed on the housing 210 for adjusting the pressure inside the housing 210. It should be noted that in a natural state, the interior of the housing 210 is fully filled with liquid photosensitive resin, so the pressure inside the housing 210 includes the pressure generated by the gravity of the liquid photosensitive resin. In addition, since the housing 210 is in the atmospheric environment, the received environmental air pressure (atmospheric pressure) of the housing is also transmitted to the interior of the housing 210. The pressure adjusting element 250 is used to adjust the environmental air pressure inside the housing 210.

The pressure adjusting element 250 is used to reduce the environmental air pressure inside the housing 210 at least when the carrying platform 220 is away from the light-transmitting panel 212, that is, to make the environmental air pressure inside the housing 210 smaller than the environmental air pressure. In the present invention, the environmental air pressure refers to the environmental air pressure outside the housing 210, which is usually 1 atmospheric pressure.

According to the embodiment shown in FIG. 2, during the process of 3D printing, after the printing of one layer of the molding workpiece is completed, there is no gap between the molding workpiece and the lower surface of the light-transmitting panel 212, due to the existence of atmospheric pressure, the molding workpiece and the lower surfaces of the light-transmitting panels 212 are closely attached to each other, and it is difficult to separate them.

Assuming that the atmospheric pressure is $1kg/cm^2$, and the contact area between the molding workpiece and the light-transmitting panel 212 is $5cm^2$, the pulling force (P) required separating the molding workpiece from the lower surface of the light-transmitting panel 212 is:

$$P = 1kg/cm^2 * 5cm^2 = 5\ kg = 5*9.8N = 49N$$

In addition, there is still a certain adhesive force between the upper surface of the molding workpiece and the lower surface of the light-transmitting panel 212, so that when the carrying platform 220 drives the molding workpiece on it to move downward needs to overcome a large resistance, such a hard pull may cause damage to the molding workpiece or the light-transmitting panel 212.

When the carrying platform 220 is away from the light-transmitting panel 212, that is, after the printing of a certain layer of the molding workpiece has been completed, the pressure adjusting element 250 adjusts the pressure inside the housing to reduce the pressure on the molding workpiece inside the housing 210, reducing the resistance as described above, which makes the carrying platform 220 only need to overcome the adhesive force, and this adhesive force can be reduced through the contact layer on the lower surface of the light-transmitting panel 212, and then can easily drive the molding workpiece on it to move downwards, and separating from the light-transmitting panel 212.

The pressure adjusting element 250 reduces the environmental air pressure inside the housing 210 when the carrying platform 220 is away from the light-transmitting panel 212, including during the entire dynamic process of the carrying platform 220 moving away from the light-transmitting panel 212, and also during the time period before the carrying platform 220 is about to move away from the light-transmitting panel 212.

When the pressure inside the housing 210 is lower than the environmental air pressure, the pressure on the upper surface and the lower surface of the light-transmitting panel 212 will be unbalanced, that is, the upper surface of the light-transmitting panel 212 is still subject to the environmental air pressure, while the pressure on the lower surface of the light-transmitting panel 212 is lower than the environmental air pressure on the upper surface of the light-transmitting panel 212. This imbalance is beneficial for the carrying platform 220 to drive the molding workpiece to separate from the lower surface of the light-transmitting panel 212, but it may also cause deformation of the light-transmitting panel 212 at the same time. If the light-transmitting panel 212 is deformed during exposure, the printing precision will be affected.

In some embodiments, the pressure adjusting element 250 is also used to at least partially recover the environmental air pressure received at the interior of the housing 210 after the molding workpiece is separated from the light-transmitting panel 212. "At least partial recover" here includes three kinds of conditions: only recovering part of the environmental air pressure received inside the housing 210, fully recovering the environmental air pressure received inside the housing 210, and making the environmental air pressure received inside the housing 210 greater than its original environmental air pressure. Since the molding workpiece has been successfully separated from the lower surface of the light-transmitting panel 212, the pressure adjusting element 250 recover the environmental air pressure inside the housing 210 to balance the air pressure on the upper and lower surfaces of the light-transmitting panel 212, so that the light-transmitting panel 212 can reach the balanced state, and will not cause damage to the light-transmitting panel 212 or affect printing precision due to long-term deformation. On the other hand, recovering the environmental air pressure inside the housing 210 even makes the pressure inside the housing 210 higher than the environmental air pressure, which can accelerate the liquid photosensitive resin to fill the printing area between the molding workpiece and the light-transmitting panel 212, and improve printing efficiency.

In some other embodiments, the light-curing 3D printing device 200 of the present invention further comprising a pressure gauge (not shown in the drawings), which is used to measure the pressure inside the housing 210. The pressure gauge can be located inside the housing 210, or located on the housing 210, or connected to the housing 210. This pressure gauge can be used to measure air pressure or hydraulic pressure. The pressure adjusting element 250 is adjusted in real time according to the pressure inside the housing 210. For example, when the pressure needs to be increased, the pressure gauge measures that the pressure inside the housing 210 reaches a certain boost threshold, the pressurization is stopped; when the pressure needs to be reduced, the pressure gauge measures that the pressure inside the housing 210 reaches a certain decompression threshold, the decompression is stopped.

In some embodiments, pressure adjusting element 250 includes a piston and a driver. The piston 251 in the pressure adjusting element 250 is shown in FIG. 2. The piston 251 is in contact with the liquid photosensitive resin inside the housing 210. The driver (not shown in drawings) is outside the housing 210 and connected with the piston 251 for driving the piston 251 for reciprocating motion. It can be understood that since the piston 251 is in contact with the liquid photosensitive resin, the part of the piston 251 that is in contact with the liquid photosensitive resin should be made of a material that does not react with the liquid photosensitive resin. In the embodiment shown in FIG. 2, when the driver drives the piston 251 to move away from the housing 210, it can offset the environmental air pressure inside the housing 210, that is, reducing the environmental air pressure inside the housing 210. When the driver drives the piston 251 moves toward the direction close to the housing 210, the environmental air pressure inside the housing 210 can be recovered. Therefore, when the carrying platform 220 is away from the light-transmitting panel 212, the driver drives the piston 251 to move away from the housing 210; after the molding workpiece is separated from the light-transmitting panel 212, the driver drives the piston 251 to move towards the direction that close to the housing 210.

After the liquid photosensitive resin is cured, the change of the printing material from liquid to solid will cause a certain volume loss. For example, the volume loss is 5%, if the volume of the liquid photosensitive resin is 1cm$^3$, the volume of the solid photosensitive resin after completely curing is 0.95 cm$^3$. The piston 251 in the pressure adjusting element 250 of the present invention can also balance the loss of printing materials. As the volume of the liquid photosensitive resin inside the housing 210 shrinks, the adjustment position of the piston 251 can change accordingly. For example, assuming that when the piston 251 located at a first position, the environmental air pressure received inside the housing 210 can be reduced, and when the piston 251 is located at a second position, the environmental air pressure received inside the housing 210 can be recovered. During the printing process, the specific position of the first position and the second position are gradually changed.

In some embodiments, a spring structure is also included between the piston and the driver. The driver is connected to the piston through the spring structure. When the piston is away from the housing 210, the spring structure is stretched, and when the piston is close to the housing 210, the spring structure is compressed. The internal pressure of the housing can be controlled by controlling the tension of the spring structure. For example, assuming that the cross-sectional area of the piston is 1cm$^2$, then when the driver drives the piston to move to a certain position, the spring structure can basically balance the atmospheric pressure after generating a tension of 1kg, so that the internal pressure of the housing is basically 0.

In the embodiment shown in FIG. 2, the piston 251 is located on the side of the housing 210 that close to the top surface. This position is close to the top surface of the housing 210, that is, the end surface 211 where the light-transmitting panel 212 is located. The present invention does not limit the specific position of the pressure adjusting element 250, and the pressure adjusting element 250 can be placed at any position on the housing 210 to make the same effect.

Referring to FIG. 2, in some embodiments, the light-curing 3D printing device 200 of the present invention further comprises a storage tank 260, a first pump 270 and a vent valve 280 interconnecting with the housing 210. The storage tank 260 is used to store enough liquid photosensitive resin. As shown in FIG. 2, there is an interconnection pipe 271 between the storage tank 260 and the housing 210. Usually, before a printing starts, there is no liquid photosensitive resin in the housing 210, and the first pump 270 is connected to the storage tank 260 and is used to inject the liquid photosensitive resin stored in the storage tank 260 into the housing 210 before the printing starts, and refill the liquid photosensitive resin in the housing 210 into the storage tank 260 after the printing is finished. After the liquid photosensitive resin in the housing 210 is drawn out, the housing 210 can be opened, and the printed 3D molding workpiece can be taken out therefrom.

When the liquid photosensitive resin is injected into the housing 210 from the storage tank 260, the vent valve 280 needs to be opened so that the gas in the housing 210 is discharged. When the remaining liquid photosensitive resin in the storage tank 260 needs to be injected back into the storage tank 260, the vent valve 280 also needs to be opened, so that the gas can enter the housing 210 to reduce the resistance encountered during extraction. During the process of 3D printing, the vent valve 280 needs to be closed to ensure that there is no gas exists within the housing 210 in the printing process.

In some embodiments, a first pipeline 281 is further comprised between the vent valve 280 and the housing 210 and the storage tank 260. When the liquid photosensitive resin is injected into the housing 210, the vent valve 280 is opened, and when the liquid photosensitive resin overflows in the first pipeline 281 and flows back to the storage tank 260 through the first pipeline 281, then the vent valve 280 is closed again, thus, the air in the housing 210 is completely evacuated.

In some embodiments, the storage tank 260 may be a sealed cavity, injecting pressure into the storage tank 260 or into the housing 210, so that the liquid photosensitive resin can be transferred between the storage tank 260 and the housing 210.

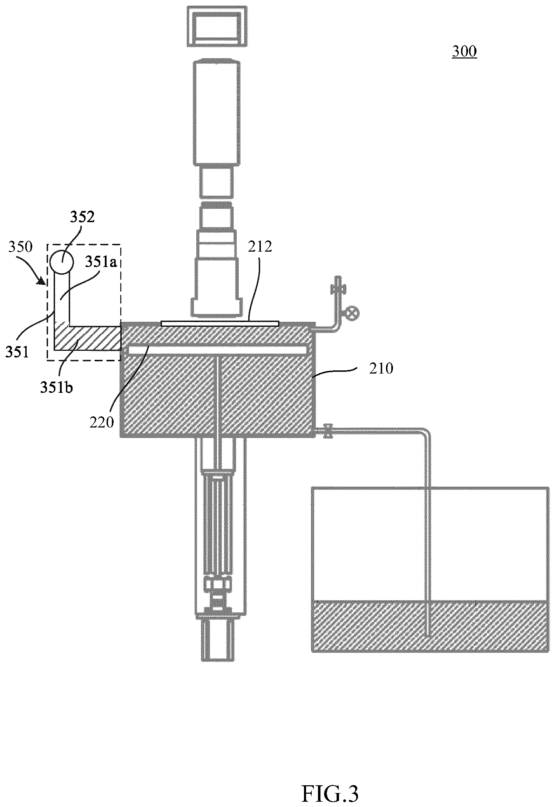

FIG. 3 is a structural schematic view of a light-curing 3D printing device according to another embodiment of the present invention. Compared with the embodiment shown in FIG. 2, the pressure adjusting element 350 in the embodiment shown in FIG. 3 is different from the pressure adjusting element 250 in FIG. 2, apart from this, components in the embodiment shown in FIG. 3 and FIG. 2 are basically the same, therefore, the description of FIG. 2 can be used to explain the structure, shape and function of these elements in FIG. 3. Here, the pressure adjusting element 350 will be described in detail with reference to FIG. 3. Referring to FIG. 3, the pressure adjusting element 350 in the light-curing 3D printing device 300 includes a second pipeline 351 connected to the housing 210 and a second pump 352 connected to the second pipeline 351. The second pipeline 351 includes a section of gas 351a and a section of liquid photosensitive resin 351b. The second pump 352 is connected to an end of the second pipeline 351 away from the housing 210, and is used for inputting gas into the second pipeline 351 and extracting gas from the second pipeline 351. Preferably, the second pump 352 is an air pump.

The second pipeline 351 interconnecting with the housing 210, so that the liquid photosensitive resin 351b in the second pipeline 351 contacts with the liquid photosensitive resin in the housing 210. In the embodiment shown in FIG. 3, the second pipeline 351 includes two sections of pipelines perpendicular to each other, and the second pump 352 is arranged at the port of the pipelines in the vertical direction. According to the principle of the connector, when a section of gas 351 in the second pipeline 351 is at environmental air pressure, the liquid level of the liquid photosensitive resin in the second pipeline 351 should be equal to the liquid level of the liquid photosensitive resin in the housing 210.

In the embodiment shown in FIG. 3, when the second pump 352 extracts gas from the second pipeline 351, the environmental air pressure inside the housing 210 can be reduced. When the second pump 352 inputs gas into the second pipeline 351, the environmental air pressure inside the housing 210 can be recovered. Therefore, at least when the carrying platform 220 is away from the light-transmitting panel 212, the second pump 352 extracts gas from the second pipeline 351; after the molding workpiece is separated from the light-transmitting panel 212, the second pump 352 inputs gas into the second pipeline 351.

The time for the second pump 352 to input gas or extract gas can be fixedly set, or can be set according to certain measurements. In the embodiment including a pressure gauge, the working parameters of the second pump 352 can be determined according to the pressure inside the housing 210 measured by the pressure gauge, including pump power, working time, etc.

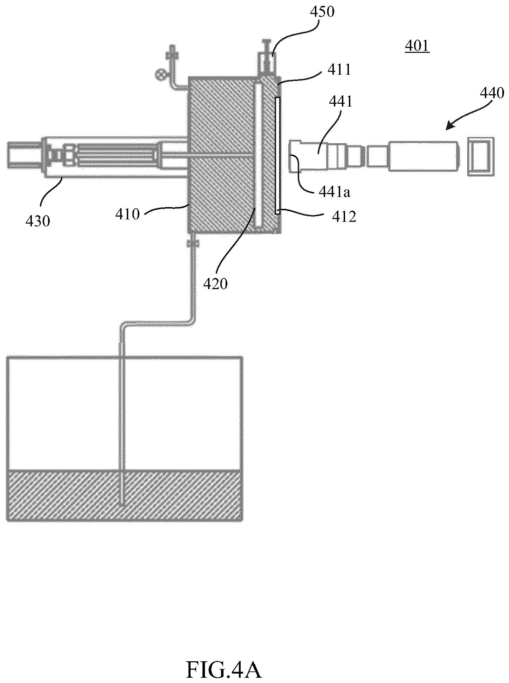

FIG. 4A is a structural schematic view of a light-curing 3D printing device according to another embodiment of the present invention. As shown in FIG. 4A, the light-curing 3D printing device 401 of this embodiment is a side-mounted 3D printing device, and the housing 410 is filled with liquid photosensitive resin, and the side 411 of the housing 410 has a light-transmitting panel 412. The carrying platform 420 is disposed inside the housing 410 and is used for carrying the molding workpiece. The drive mechanism 430 can drive the carrying platform 420 to reciprocate along the horizontal direction, so that the carrying platform 420 approaches and moves away from the light-transmitting panel 412. The optical system 440 includes an exposure device 441 located outside the housing 410 and opposite to the light-transmitting panel 412. The light beam pattern emits into the housing 410 from the side of the light-emitting side 441a of the exposure device 441, so that a layer of liquid photosensitive resin in the housing 410 close to the light-transmitting panel 412 is controllably cured. In the embodiment shown in FIG. 4A, the optical system 440 is located on the right side of housing 410. In other embodiments, it is not necessary to limit the specific position of the optical system 440 as long as the light beam enters the interior of the housing 410 from the side of the housing 410.

The pressure adjusting element 450 is located on the housing 410 and is used for adjusting the pressure inside the housing 410. The pressure adjusting element 450 is used to reduce the environmental air pressure inside the housing 410 at least when the carrying platform 420 is away from the light-transmitting panel 412. The specific implementation of the pressure adjusting element 450 is the same as that of the embodiment shown in FIG. 2 and FIG. 3, and the description content related to FIG. 2 and FIG. 3 can be used to describe the embodiment shown in FIG. 4A.

FIG. 4A is an example of the side-mounted printing method of the light-curing 3D printing device of the present invention, which is not used to limit the direction of the side-mounted type and the number of carrying platforms. In some embodiments, light beam irradiation can be performed simultaneously on two horizontally opposite sides of the housing 410, and these embodiments accordingly include two carrying platforms.

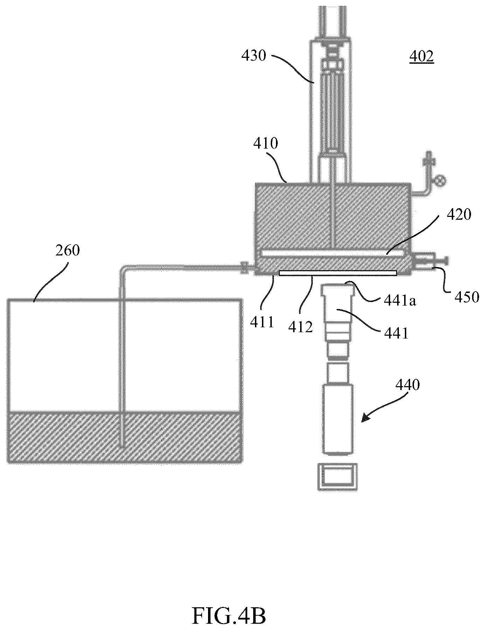

FIG. 4B is a structural schematic view of a light-curing 3D printing device according to another embodiment of the present invention. Referring to FIG. 4B, the light-curing 3D printing device 402 of this embodiment is a lower-mounted 3D printing device, compared with the light-curing 3D printing device 401 shown in FIG.4A, the components in the light-curing 3D printing device 402 follow the reference numerals in FIG. 4A. Since the optical system 440 is located below the housing 410, the side surface 411 is located at the bottom of the housing 410, and accordingly, the light-transmitting panel 412 is also located at the bottom of the housing 410.

Referring to FIG. 4B, the housing 410 is fully filled with liquid photosensitive resin, and the side 411 of the housing 410 has a light-transmitting panel 412. The carrying platform 420 is disposed inside the housing 410 and is used for carrying the molding workpiece. The drive mechanism 430 can drive the carrying platform 420 to reciprocate along the vertical direction, so that the carrying platform 420 can move close to or move away from the light-transmitting panel 412. The optical system 440 includes an exposure device 441 located outside the housing 410 and opposite to the light-transmitting panel 412. The light beam pattern emits into the housing 410 from the side of the light-emitting side 441a of the exposure device 441, so that a layer of liquid photosensitive resin in the housing 410 close to the light-transmitting panel 412 is controllably cured. In the embodiment shown in FIG. 4B, the optical system 440 is located under the housing 410. In other embodiments, it is not necessary to limit the specific position of the optical system 440 as long as the light beam enters the interior of the housing 410 from the bottom of the housing 410.

Referring to FIG. 4B, the storage tank 260 is interconnected to the housing 410. The storage tank 260 is the same as the material storage tank 260 of the embodiment shown in FIG. 2, and the description about the storage tank 260 in FIG. 2 is applicable to the storage tank 260 in FIG. 4B. Preferably, the storage tank 260 is interconnected to the housing 410 at a position closing to the bottom of the housing 410.

The pressure adjusting element 450 is located on the housing 410 and is used for adjusting the pressure inside the housing 410. The pressure adjusting element 450 is used to reduce the environmental air pressure inside the housing 410 at least when the carrying platform 420 is away from the light-transmitting panel 412. The specific implementation of the pressure adjusting element 450 is the same as that of the embodiment shown in FIG. 2 and FIG. 3, and the description content related to FIG. 2 and FIG. 3 can be used to illustrate the embodiment shown in FIG. 4B.

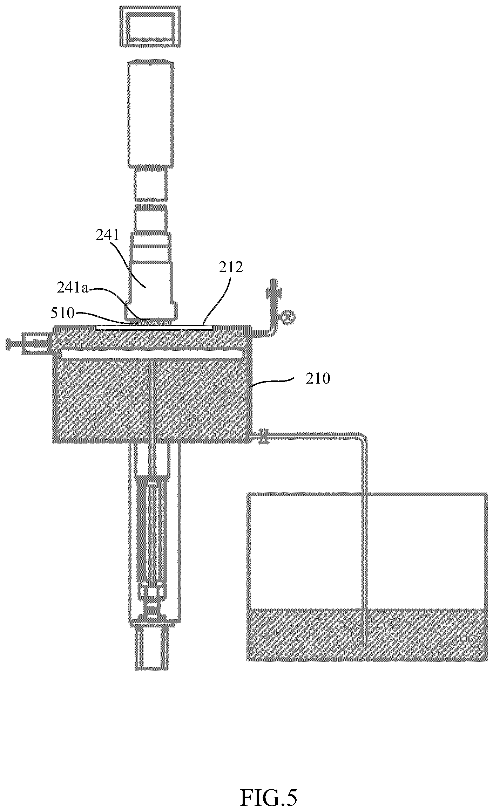

FIG. 5 is a structural schematic view of a light-curing 3D printing device according to another embodiment of the present invention. As shown in FIG. 5, in the light-curing 3D printing device of this embodiment, the space between the light-emitting side 241a of the exposure device 241 and the light-transmitting panel 212 is filled with the immersion liquid 510, so that the light emitted from the light-emitting side 241a passes through the immersion liquid 510 and reaches the liquid photosensitive resin in the housing 210.

In the embodiment shown in FIG. 5, the distance between the light-emitting side 241a and the upper surface of the light-transmitting panel 212 is relatively short, so that the immersion liquid 510 can fill the space between the light-emitting side 241a and the upper surface of the light-transmitting panel 212 without losing. Surely, if the gap is large, the present embodiment also needs to include a mechanism for maintaining the immersion liquid 510, so as to replenish and remove the immersion liquid 510 at any time. The light beam pattern emitted from the light-emitting side 241a completely passes through the immersion liquid 510 and then reaches the liquid photosensitive resin in the housing 210 without passing through the air.

The beneficial effect of the embodiment shown in FIG. 5 is that since the medium between the light-emitting side 241a (for example: lens) and the light-transmitting panel 212 is liquid, the numerical aperture can be effectively improved, thereby reducing the impact of light diffraction on the imaging quality, improving the imaging resolution, realizing immersion printing, and improving the printing precision to the nanometer level which can greatly improve the precision of 3D printing.

The present invention does not limit the material of the immersion liquid 510, and any suitable liquid may be used, such as deionized water or other liquids.

FIG. 5 shows a schematic view by taking the light-curing 3D printing device shown in FIG. 2 as an example, and is not used for the specific structure of the printing device applicable to the immersion printing. In the embodiments shown in FIG. 3 and FIG. 4A and FIG. 4B, an immersion liquid 510 may also be provided between the light-emitting side 241a and the outer surface of the light-transmitting panel 212. In these embodiments, in order to ensure that the space between the light-emitting side 241a and the outer surface of the light-transmitting panel 212 is fully filled with the immersion liquid 510, additional auxiliary devices, such as a container capable of containing the immersion liquid 510, may also be added.

For high-precision 3D model printing, the resistance encountered when the molding workpiece is separated from the lower surface of the light-transmitting panel 212 will cause more serious damage to the molding workpiece. Therefore, by using the light-curing 3D printing device of the present invention, the pressure in the housing 210 is adjusted by the pressure adjusting element 250 during printing, so that the molding workpiece can be easily separated from the lower surface of the light-transmitting panel 212, thereby protecting the integrity of the molding workpiece.

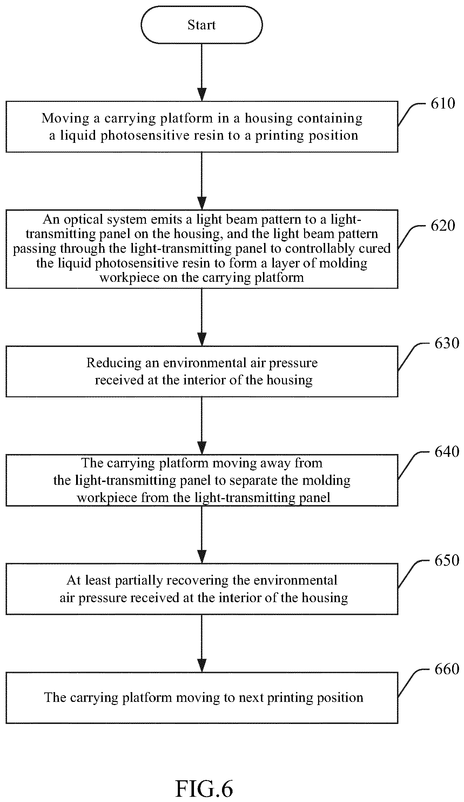

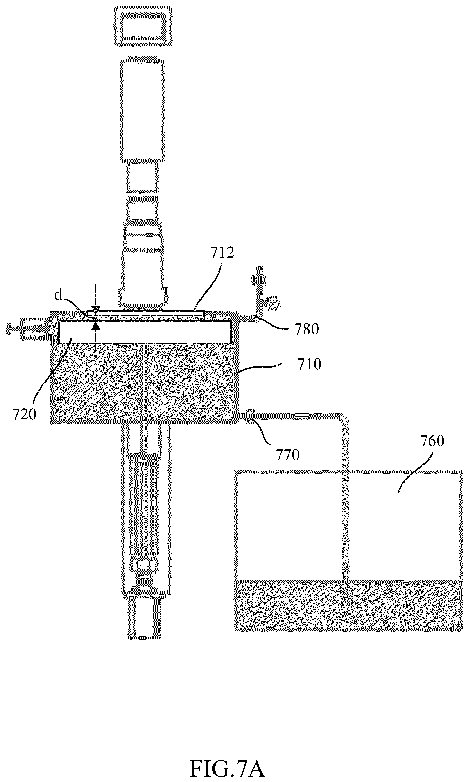

FIG. 6 is an exemplary flowchart of a light-curing 3D printing method according to an embodiment of the present invention. The 3D printing devices of the embodiments shown in FIG. 2-FIG. 5 can all print three-dimensional models according to the method steps shown in FIG. 6. Therefore, the foregoing descriptions regarding FIG. 2-FIG. 5 are suitable for explaining the 3D printing method of the present invention. FIG. 7A-7D are schematic diagrams of the printing processes according to the light-curing 3D printing method of the present invention. The light-curing 3D printing method of the present invention will be described below with reference to FIG. 6 and FIG. 7A-7D. Referring to FIG. 6, the light-curing 3D printing method includes the following steps:

Step 610, moving the carrying platform in the housing containing the liquid photosensitive resin to the printing position.

In this step, the carrying platform moves to the printing position and the optical system is ready for exposure. Referring to FIG. 7A, when printing is just started, there is no molding workpiece on the carrying platform 720, and the carrying platform 720 moves to a position where there is a printing layer thickness d between the carrying platform 720 and the light-transmitting panel 712. During the printing process, there is a molding workpiece on the carrying platform 720, and the carrying platform 720 moves to a position where there is a printing layer thickness d between the top of the molding workpiece and the light-transmitting panel 712.

In some embodiments, before printing starts, there is no liquid photosensitive resin inside the housing 710, the printing method of the present invention also includes opening the vent valve 780 connected to the storage tank 760 on the housing 710, injecting liquid photosensitive resin into the housing 710 from the storage tank 760; closing the vent valve 780 before printing the molding workpiece; and after the printing is finished, opening the vent valve 780 to refill the remaining liquid photosensitive resin in the housing 710 into the storage tank 760, so as to open the housing 710 to take out the final 3D molded workpiece. The action of injecting the liquid photosensitive resin into the housing 710 and back into the storage tank 760 may be performed by the first pump 770 connected to the storage tank 760.

Step 620, the optical system emits a light beam pattern to the light-transmitting panel on the housing, and the light beam pattern passes through the light-transmitting panel to controllably cured the liquid photosensitive resin to form a layer of molding workpiece on the carrying platform.

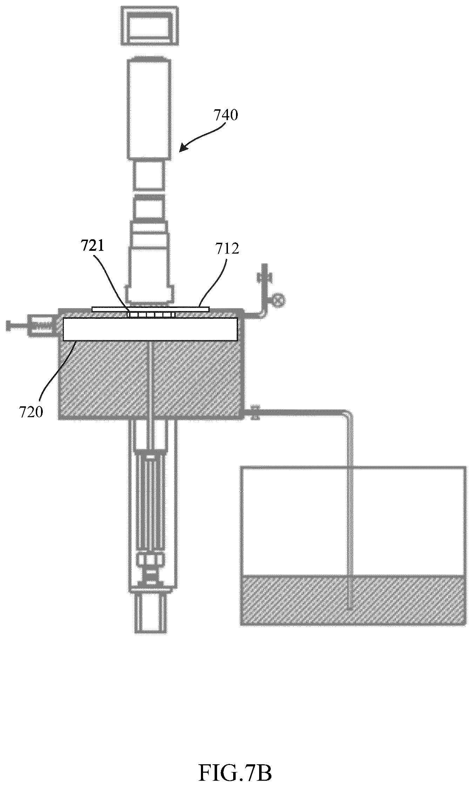

Referring to FIG. 7B, the optical system 740 emits the light beam pattern to the light-transmitting panel 712, forming a layer of molding workpiece 721 on the carrying platform 720. In this step, the layer of liquid photosensitive resin is the layer of liquid photosensitive resin closest to the light-transmitting panel 712.

Step 630, reducing the environmental air pressure at the interior of the housing.

In this step, the pressure inside the housing can be adjusted through the pressure adjusting element mentioned above, and the corresponding adjustment method and steps can refer to the above description. Due to the reduction of the environmental air pressure inside the housing, the pressure on the lower surface of the light-transmitting panel 712 is reduced, making it easy to separate the molding workpiece from the light-transmitting panel.

Step 640, the carrying platform moving away from the light-transmitting panel to separate the molding workpiece from the light-transmitting panel.

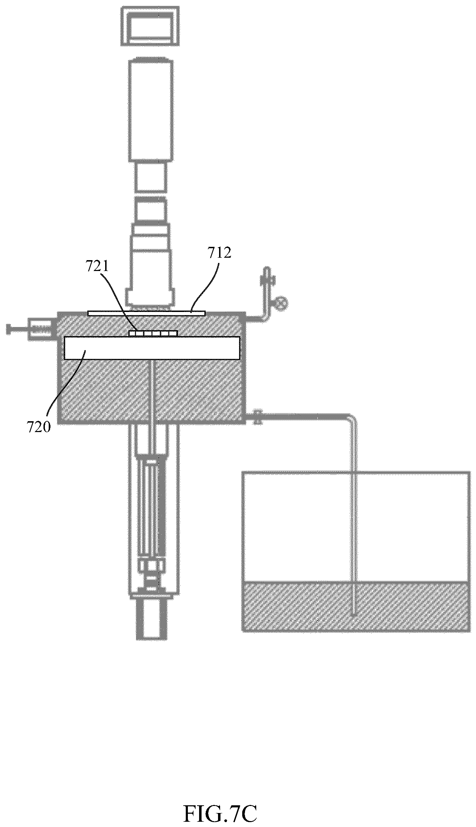

As shown in FIG. 7C, through the pressure adjustment in step 630, the resistance encountered in separating the molding workpiece 721 from the light-transmitting panel 712 becomes smaller, so that the carrying platform 720 can easily drive the molding workpiece 721 to separate from the light-transmitting panel 712.

Step 650, at least partially recovering the environmental air pressure received at the interior of the housing.

In this step, the pressure inside the housing can be adjusted through the pressure adjusting element mentioned above, and the environmental air pressure inside the housing can be at least partially recovered, for the corresponding adjustment method and steps, refer to the above description.

Step 660, the carrying platform moving to next printing position, and be ready for the next layer of printing.

In this step, the carrying platform can be far away from the light-transmitting panel for a certain distance, then close to the light-transmitting panel, and finally reach a position where the distance from the light-transmitting panel is one layer thick, so as to ensure the effective separation of the molding workpiece and the light-transmitting panel. The carrying platform can also stop at a position one layer thick away from the light-transmitting panel during the process of moving away from the light-transmitting panel in step 640, but it must be ensured that the molding workpiece and the light-transmitting area are sufficiently separated. The present invention does not limit the moving process of the carrying platform before reaching the next printing position. The order of steps 650 and 660 can be exchanged.

Steps 610-660 can be executed repeatedly to achieve layer-by-layer printing of the 3D model.

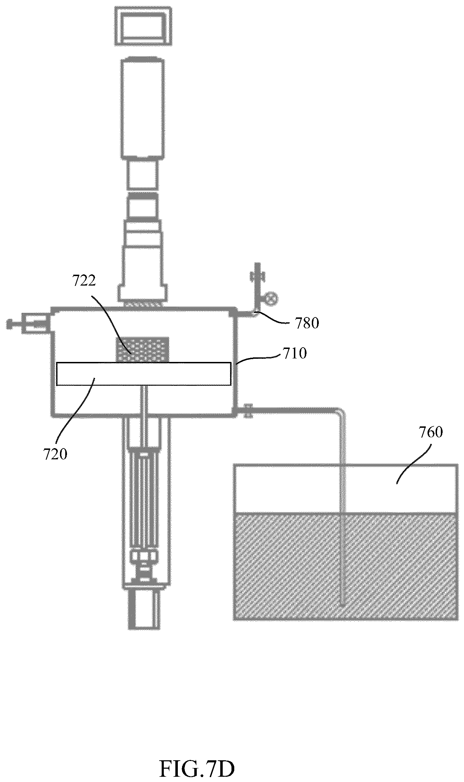

Referring to FIG. 7D, after the overall 3D model is printed, the vent valve 780 is opened to refill the remaining liquid photosensitive resin in the housing 710 into the storage tank 760, so that the housing 710 can be opened to take out the final 3D molding workpiece. Obviously, the liquid level of the liquid photosensitive resin stored in the storage tank 760 rises.

The light-curing 3D printing device shown in FIG. 7A-7D corresponds to the light-curing 3D printing device of the embodiment shown in FIG. 5. The space between the light-emitting side 241a of the exposure device 241 and the light-transmitting panel 212 is fully filled with the immersion liquid 510. It can be understood that FIG. 7A-7D are not used to limit the implementation device of the light-curing 3D printing method of the present invention.

According to the printing method shown in FIG. 6, 1. It reduces the resistance of the separation of the molding workpiece and the light-transmitting panel. 2. It accelerates the filling of the liquid photosensitive resin in the printing area between the molding workpiece and the light-transmitting panel. 3. It ensures the printing precision, especially the layer thickness precision, which ensures the integrity and printing quality of the molding workpiece. 4. It improves the overall printing efficiency.

This application uses certain words to describe the embodiments of the application. For example, "one embodiment", "an embodiment", and/or "some embodiments" refer to a certain feature, structure or characteristic related to at least one embodiment of the present application. Therefore, it should be emphasized and noted that two or more references to "one embodiment" or "an embodiment" or "an alternative embodiment" in different places in this specification do not necessarily refer to the same embodiment. In addition, certain features, structures or characteristics of one or more embodiments of the present application may be properly combined.

Although the present invention has been described with reference to the current specific embodiments, however, those of ordinary skill in the art should recognize that the above embodiments are only used to illustrate the present invention, and various equivalent changes or substitutions can also be made without departing from the spirit of the present invention, therefore, as long as the changes and modifications to the above embodiments are within the spirit of the present invention, they all fall within the scope of the claims of the present application.

**Claims**

1. A light-curing 3D printing device, comprising:

   a housing, the housing being suitable for containing a liquid photosensitive resin, and one end surface of the housing comprising a light-transmitting panel;
   a carrying platform, which is disposed in the housing and is used to carry a molding workpiece;
   a drive mechanism, which is used to drive the carrying platform to move closer to and away from the light-transmitting panel;
   an optical system, which comprises an exposure device that is located outside the housing and is opposite to the light-transmitting panel, the exposure device being suitable for emitting a light beam pattern from a light emitting side, so that a layer of the liquid photosensitive resin, which is in the housing and is closely attached to the light-transmitting panel, can be controllably cured; and
   a pressure adjusting element, which is disposed on the housing and is used to adjust the pressure at the interior of the housing, the pressure adjusting element being used, at least when the carrying platform is far from the light-transmitting panel, reducing the environmental air pressure received at the interior of the housing so as to separate the molding workpiece from the light-transmitting panel.

2. The light-curing 3D printing device according to claim 1, **characterized in that**, the pressure adjusting element is used to at least partially recover the environmental air pressure received at the interior of the housing after the molding workpiece is separated from the light-transmitting panel.

3. The light-curing 3D printing device according to claim 1, **characterized in that**, during a printing process of the molding workpiece, the housing remains closed and is filled with the liquid photosensitive resin.

4. The light-curing 3D printing device according to claim 1, **characterized in that**, the drive mechanism is arranged outside the housing and connected to the carrying platform by a connecting rod passing through the housing.

5. The light-curing 3D printing device according to claim 1, **characterized in that**, a side of the light-transmitting panel contacting the liquid photosensitive resin has a contact layer, and the contact layer is a non-stick material.

6. The light-curing 3D printing device according to any one of claim 1 or 2, **characterized in that**, the pressure adjusting element comprises:

   a piston, the piston is in contact with the liquid photosensitive resin in the housing; and
   a driver, the driver is connected with the piston, and the driver is used to drive the piston for reciprocating motion.

7. The light-curing 3D printing device according to any one of claim 1 or 2, **characterized in that**, the pressure adjusting element comprises:

   a second pipeline connected to the housing, the second pipeline includes gas, and the gas is in contact with the liquid photosensitive resin in the housing; and
   a second pump connected to the second pipeline, the second pump is used for inputting the gas into the second pipeline and extracting the gas from the second pipeline.

8. The light-curing 3D printing device according to claim 1, **characterized in that**, further comprising:

   a storage tank connected to the housing, the storage tank is used to store the liquid photosensitive resin;
   a first pump connected to the storage tank, the first pump is used to inject the liquid photosensitive resin in the storage tank into the housing before a printing, so that the housing is filled with the liquid photosensitive resin, and refilling the liquid photosensitive resin in the housing into the storage tank after the printing is finished; and
   a vent valve interconnecting with the housing, the vent valve is opened when the liquid photosensitive resin is injected into the housing and the liquid photosensitive resin is refilled into the storage tank, and closed during the printing process of the molded workpiece.

9. The light-curing 3D printing device according to claim 1, **characterized in that**, further comprising a pressure gauge for measuring the pressure inside the housing.

10. The light-curing 3D printing device according to claim 1, **characterized in that**, a space between the light emitting side of the exposure device and the light-transmitting panel is filled with immersion liquid, so that a light beam emitted from the light emitting side passes through the immersion liquid and reaches the liquid photosensitive resin in the housing.

11. A light-curing 3D printing method, comprising:

   moving a carrying platform in a housing containing a liquid photosensitive resin to a printing position;
   emitting a light beam pattern from an optical system to a light-transmitting panel on the housing, the light beam pattern passing through the light-transmitting panel to controllably cured the liquid photosensitive resin to form a layer of molding workpiece on the carrying platform;
   reducing an environmental air pressure received at the interior of the housing;
   moving the carrying platform away from the light-transmitting panel to separate the molding workpiece from the light-transmitting panel;
   at least partially recovering the environmental air pressure received at the interior of the housing; and
   moving the carrying platform to next printing position.

12. The light-curing 3D printing method according to claim 11, **characterized in that**, further comprising:

   before a printing starts, opening a vent valve connected to a storage tank on the housing, and injecting the liquid photosensitive resin into the housing from the storage tank;
   closing the vent valve before the printing begins; and
   after the printing is finished, opening the vent valve to refill the liquid photosensitive resin in the housing into the storage tank.

FIG.1

FIG.2

300

352

350

351a

351

351b

220

212

210

FIG.3

FIG.4A

430    402

410

420

260

411  412    441a    450

441

440

FIG.4B

FIG.5

```
                          ┌─────────────┐
                          │    Start    │
                          └─────────────┘
                                 │
                                 ▼
      ┌──────────────────────────────────────────────┐      ┌─ 610
      │   Moving a carrying platform in a housing containing │
      │   a liquid photosensitive resin to a printing position │
      └──────────────────────────────────────────────┘
                                 │
                                 ▼
      ┌──────────────────────────────────────────────┐      ┌─ 620
      │   An optical system emits a light beam pattern to a light- │
      │   transmitting panel on the housing, and the light beam pattern │
      │   passing through the light-transmitting panel to controllably cured │
      │   the liquid photosensitive resin to form a layer of molding │
      │   workpiece on the carrying platform │
      └──────────────────────────────────────────────┘
                                 │
                                 ▼
      ┌──────────────────────────────────────────────┐      ┌─ 630
      │   Reducing an environmental air pressure │
      │   received at the interior of the housing │
      └──────────────────────────────────────────────┘
                                 │
                                 ▼
      ┌──────────────────────────────────────────────┐      ┌─ 640
      │   The carrying platform moving away from │
      │   the light-transmitting panel to separate the molding │
      │   workpiece from the light-transmitting panel │
      └──────────────────────────────────────────────┘
                                 │
                                 ▼
      ┌──────────────────────────────────────────────┐      ┌─ 650
      │   At least partially recovering the environmental │
      │   air pressure received at the interior of the housing │
      └──────────────────────────────────────────────┘
                                 │
                                 ▼
      ┌──────────────────────────────────────────────┐      ┌─ 660
      │   The carrying platform moving to next printing position │
      └──────────────────────────────────────────────┘
```

FIG.6

FIG.7A

FIG.7B

FIG.7C

FIG.7D

## INTERNATIONAL SEARCH REPORT

| | International application No. |
|---|---|
| | **PCT/CN2021/101143** |

**A. CLASSIFICATION OF SUBJECT MATTER**

B29C 64/364(2017.01)i; B29C 64/129(2017.01)i; B33Y 30/00(2015.01)i

According to International Patent Classification (IPC) or to both national classification and IPC

**B. FIELDS SEARCHED**

Minimum documentation searched (classification system followed by classification symbols)

B29C64/-; B33Y30/-; B29C67/-

Documentation searched other than minimum documentation to the extent that such documents are included in the fields searched

Electronic data base consulted during the international search (name of data base and, where practicable, search terms used)

CNABS, CNTXT, CNKI: 普利生机电科技, 普利生信息科技, 侯锋, 3D, 三维, 立体, 打印, 成型, 光固化, 面曝光, 数字成型, SLA, DLP, 压力, 压强, 气压, 降低, 减小, 变小, 排气, 减压, 分离, 剥离, 阻力, 粘, 黏 VEN, USTXT, WOTXT, EPTXT: PRISMLAB, PRIS-N, 3D, three 1w dimens+, print+, cur+, SLA, DLP, pressur+, reduc+, depress+, pumpdown+, releas+, peel +, strip+, detach+, resistance+, drag+, adher+

**C. DOCUMENTS CONSIDERED TO BE RELEVANT**

| Category* | Citation of document, with indication, where appropriate, of the relevant passages | Relevant to claim No. |
|---|---|---|
| PX | CN 112265262 A (SHANGHAI PRISMLAB INFORMATION TECHNOLOGY CO., LTD. et al.) 26 January 2021 (2021-01-26) description, paragraphs 0032-0080, figures 2-9 | 1-6, 8-9, 11-12 |
| X | CN 107756785 A (CANON K. K.) 06 March 2018 (2018-03-06) description, embodiment 2, and figure 3 | 1-4, 8, 10 |
| X | WO 2012150497 A1 (DWS S.R.L.) 08 November 2012 (2012-11-08) description page 8 line 11- page 13 line 12, figures 3-6 | 1, 4-5, 8-10 |
| Y | CN 107627601 A (SHANGHAI INSTITUTE OF CERAMICS, CHINESE ACADEMY OF SCIENCES) 26 January 2018 (2018-01-26) description, paragraphs 0029-0047, figures 1-3 | 1-12 |
| Y | WO 2019009725 A1 (ATUM HOLDING B.V.) 10 January 2019 (2019-01-10) description page 3 paragraph 1, page 5 last paragraph - page 6 paragraph 2 | 1-12 |
| A | CN 210792092 U (BYD COMPANY LIMITED et al.) 19 June 2020 (2020-06-19) entire document | 1-12 |

☑ Further documents are listed in the continuation of Box C.     ☑ See patent family annex.

| | |
|---|---|
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **19 July 2021** | **18 August 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**EP 4 169 698 A1**

<table>
<tr><td colspan="2" align="center">INTERNATIONAL SEARCH REPORT</td><td colspan="2">International application No.<br><br>**PCT/CN2021/101143**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | CN 210706051 U (HANGZHOU DEDI INTELLIGENT TECHNOLOGY CO., LTD.) 09 June 2020 (2020-06-09)<br>        entire document | 1-12 |
| A | CN 106584843 A (XYZPRINTING, INC. et al.) 26 April 2017 (2017-04-26)<br>        entire document | 1-12 |
| A | CN 106426915 A (QINGDAO UNIVERSITY OF TECHNOLOGY) 22 February 2017 (2017-02-22)<br>        entire document | 1-12 |
| A | JP 2002067173 A (OLYMPUS OPTICAL CO.) 05 March 2002 (2002-03-05)<br>        entire document | 1-12 |
| A | US 2019134899 A1 (3D Systems, Inc.) 09 May 2019 (2019-05-09)<br>        entire document | 1-12 |
| A | US 2017297261 A1 (SCHULTHEISS GMBH) 19 October 2017 (2017-10-19)<br>        entire document | 1-12 |

Form PCT/ISA/210 (second sheet) (January 2015)

INTERNATIONAL SEARCH REPORT
Information on patent family members

International application No.

**PCT/CN2021/101143**

| Patent document cited in search report | | | Publication date (day/month/year) | Patent family member(s) | | | Publication date (day/month/year) |
|---|---|---|---|---|---|---|---|
| CN | 112265262 | A | 26 January 2021 | WO | 2021004064 | A1 | 14 January 2021 |
| CN | 107756785 | A | 06 March 2018 | US | 2018056587 | A1 | 01 March 2018 |
| | | | | KR | 20180022571 | A | 06 March 2018 |
| | | | | JP | 2018030278 | A | 01 March 2018 |
| | | | | JP | 6783586 | B2 | 11 November 2020 |
| | | | | JP | 2018030323 | A | 01 March 2018 |
| WO | 2012150497 | A1 | 08 November 2012 | IT | 1405644 | B | 17 January 2014 |
| CN | 107627601 | A | 26 January 2018 | CN | 107627601 | B | 12 June 2020 |
| WO | 2019009725 | A1 | 10 January 2019 | NL | 2019204 | B1 | 16 January 2019 |
| | | | | EP | 3648950 | A1 | 13 May 2020 |
| | | | | CN | 111344135 | A | 26 June 2020 |
| | | | | JP | 2020526417 | W | 31 August 2020 |
| CN | 210792092 | U | 19 June 2020 | | None | | |
| CN | 210706051 | U | 09 June 2020 | CN | 110524877 | A | 03 December 2019 |
| CN | 106584843 | A | 26 April 2017 | US | 2017100897 | A1 | 13 April 2017 |
| | | | | CN | 106584843 | B | 27 March 2020 |
| CN | 106426915 | A | 22 February 2017 | CN | 106426915 | B | 11 January 2019 |
| JP | 2002067173 | A | 05 March 2002 | | None | | |
| US | 2019134899 | A1 | 09 May 2019 | | None | | |
| US | 2017297261 | A1 | 19 October 2017 | | None | | |

Form PCT/ISA/210 (patent family annex) (January 2015)